# EUROPEAN PATENT APPLICATION

(11) **EP 1 264 748 A1**
(43) Date of publication of application: **11.12.2002**
(21) Application number: 02254007.4
(22) Date of filing: 10.06.2002
(51) Int. Cl.: B60T 1/06, B60T 13/58

(54) **Vehicle retarder system**

(30) Priority: 08.06.2001 AU PR554801
(71) Applicant: South West Research Patents Pty Ltd, Allansford, Victoria 3277 (AU)
(72) Inventor: Bligh, James Barry, Victoria, 3281 (AU)
(74) Representative: Dealtry, Brian

(57) **Abstract**

A vehicle retarder system (10) adapted to be mounted in the driveline of a vehicle or on a wheel axle (41), the system comprising a transmission (31) mounted in the driveline or on the axle (41) and a retarding device (11) connected to the transmission (31) and adapted to be coupled to the vehicle for retarding the speed of a vehicle, whereby the transmission (31) transfers rotational speed at the driveline or axle (41) to the retarder (11) at an increased rotational speed.

## Description

The present invention relates to a retarder system for use on vehicles for retarding vehicle speed.

Retarders are used as auxiliary braking devices to a vehicle's normal service braking system. They vary in form and function depending on their mounting location in a vehicle, the type of vehicle and the method of retarding. The engine brake type retarder provides a retarder built into the engine that utilizes the engine's compression for retarding. Another type of retarder is a hydraulic retarder that is integrally formed with the transmission. When activated, this retarder fills with oil creating a pressure build up to slow the rotor in the transmission, which imparts braking power to the driving wheel. Exhaust brakes are designed for retarding medium to heavy vehicles using exhaust back pressure. The common driveline retarder uses a retarding device mounted anywhere in the driveline or at the extreme rear of a vehicle. Electric retarders, such as electromagnetic retarders operating on eddy current principles, are popular driveline retarders. Other driveline retarders operate on friction or hydraulic retarding principles.

Retarding devices require cooling as a result of the high amounts of energy absorbed, and therefore heat generated, in retarding vehicles. Electric eddy current retarders, which are common in prime movers and other heavy vehicles, are driven at drive shaft speed and are very heavy devices. Heat generated by the retarder is dissipated by an air cooling system, usually a cooling fan. Conventional electric retarders on heavy vehicles are located at the rear of the transmission in the driveline with the cooling system nearby. The problem with conventional vehicle retarder arrangements is that the size of the retarder and, in the case of hydraulic retarders, the size of the cooling system are predominantly dictated by the mounting space available under the vehicle. In general, mounting space under heavy vehicles is severely limited. This, in turn, limits the selection of retarder to one that will fit under the vehicle. Since the torque capacity of a retarder is directly related to its size, the maximum retarding capacity obtainable is also limited. Not only is torque capacity of a retarder dictated by its size but also by the efficiency and effectiveness of its cooling system. Additionally, the capacity of the cooling system, be it a fan or heat exchanger, is restricted by the mounting space available under the vehicle.

The present invention seeks to improve the retarding capacity and efficiency of a vehicle retarder system.

In accordance with the present invention there is provided a vehicle retarder system adapted to be mounted in the driveline of a vehicle or on a wheel axle, the system comprising a transmission mounted in the driveline or on the axle and a retarding device connected to the transmission for retarding the speed of a vehicle, whereby the transmission transfers rotational speed at the driveline or axle to the retarder at an increased rotational speed.

The vehicle retarder system typically has application with trailers and vehicle systems with multiple trailers. In use, the vehicle retarder system could be mounted on trailer axles.

The transmission is typically a chain and sprocket drive or a gear drive effecting a speed ratio. The transmission has an input shaft coupled to the driveline or axle and an output shaft parallel to the input shaft coupled to the retarding device. A large sprocket or gear is mounted on the input shaft and a small sprocket or gear is mounted on the output shaft. A chain engages around the sprockets to transmit power between the input and output shafts. The transmission may also be belt driven using V or toothed belts

The transmission is adapted to be mounted on a vehicle's drive shaft, final drive, drive or non-drive axle or any similar part of a vehicle where its speed can be retarded.

The vehicle retarder system further comprises a cooling system which depending on the nature of the retarding device can be a cooling fan, heat exchanger or the like.

In accordance with a further aspect of the present invention there is provided a vehicle having a drive shaft, differential or non-drive axle, the vehicle including a vehicle retarder system as described above, coupled between the vehicle and the drive shaft, differential or non-drive axle.

In accordance with a further aspect of the present invention there is provided a trailer adapted to be towed by a prime mover, the trailer comprising a plurality of wheel sets mounted on axles extending transversely of the trailer, at least one axle comprising a differential coupled to a retarder via a transmission that increases the input speed to the retarder, the retarder being secured to the trailer.

In accordance with a further aspect of the present invention there is provided a vehicle comprising wheel sets mounted on axles extending transversely of the vehicle, at least one wheel set being driven by a propshaft through a differential and a retarding system comprising a transmission coupled to a retarder, the retarder being secured to the vehicle, the transmission being driven by the propshaft to increase the rotational speed of the input to the retarder.

In accordance with a further aspect of the present invention there is provided a trailer adapted to be towed by a prime mover, the trailer comprising a plurality of wheels mounted on stub axles secured to the trailer, and a vehicle retarder system of the kind described above being secured between each stub axle and the vehicle.

### BRIEF DESCRIPTION OF THE DRAWINGS

The present invention is described further by way of example with reference to the accompanying drawings by which:
Figure 1(a) is a front view of a transfer case of the present vehicle retarder system;
Figure 1(b) is a side view of the transfer case;
Figure 2 is a plan view of the present vehicle retarder system mounted on a trailer chassis;
Figure 3 is a sectional side view taken at 3-3 of Figure 2;
Figure 4 is a plan view of the retarder system located over a drive axle;
Figure 5 is a sectional side view taken at 5-5 of Figure 4;
Figure 5 is a sectional side view taken at 5-5 of Figure 4;
Figure 6 is a plan view of the retarder system located across an axle;
Figure 7 is a sectional side view taken at 7-7 of Figure 6;
Figure 8 is a plan view of the retarder system located at the rear of a vehicle's transmission;
Figure 9 is a sectional side view taken at 9-9 of Figure 8;
Figure 10 is a plan view of the retarder system located at center support bearings of a vehicle's drive shaft;
Figure 11 is a sectional side view taken at 11-11 of Figure 10;
Figure 12 is a plan view of the retarder system located behind a vehicle's rear drive axle; and
Figure 13 is a sectional side view taken at 13-13 of Figure 12.

### DETAILED DESCRIPTION OF PREFERRED EMBODIMENT OF INVENTION

The vehicle retarder system 10 of the present invention as illustrated in the figures is designed to be mounted in a driveline of a vehicle and comprises a retarder 11 offset from the driveline of a vehicle and a transmission in the form of a transfer case 12 positioned between the driveline and retarder. The vehicle retarder system has particular use with trailers and vehicle systems with multiple trailers, and is suitable for mounting on trailer axles. It provides improved stability and a well distributed retarding force across these larger vehicle systems.

The transfer case provides a ratio change in the input speed, and hence torque, from the drive shaft, or propeller shaft, to the retarder. The transfer case is inserted between the driveline and retarder to provide an increased output speed to the retarder, which in the figures is located at an axis parallel to the driveline. Taking the retarder out of the driveline and introducing a speed ratio can increase retarder capacity, or reduce its size for the same retarding capacity.

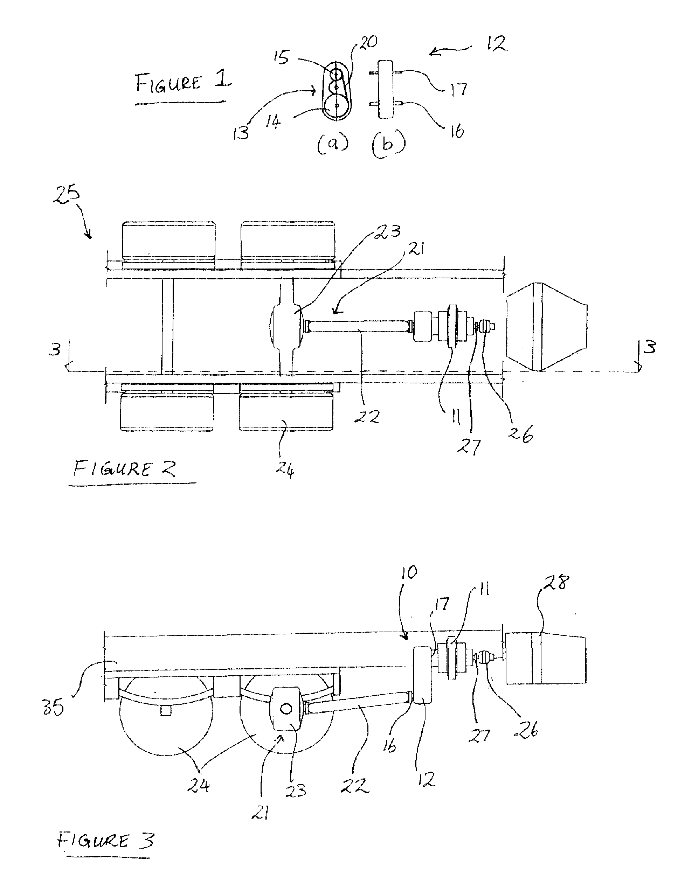

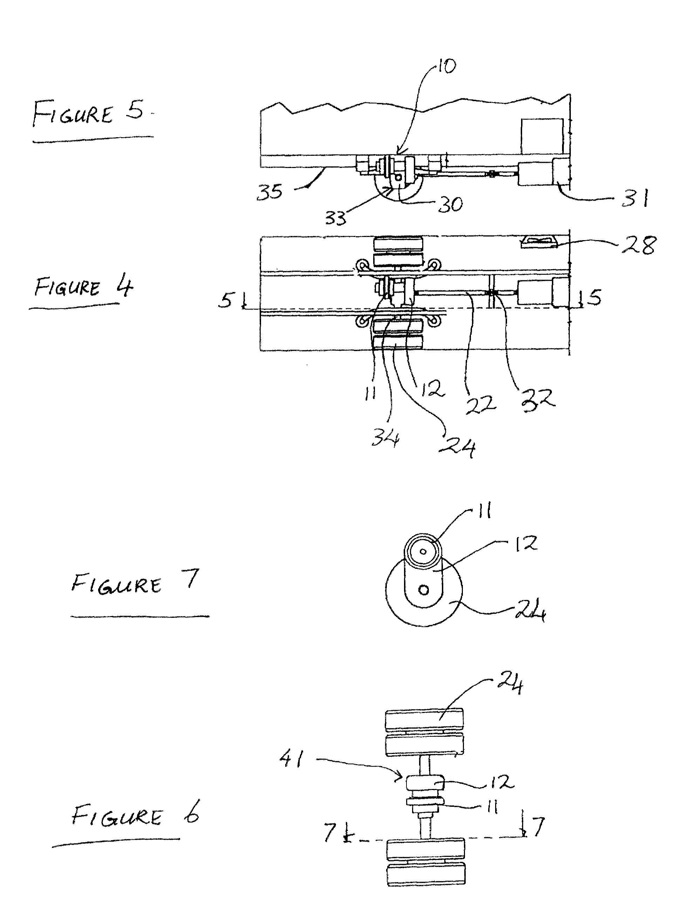

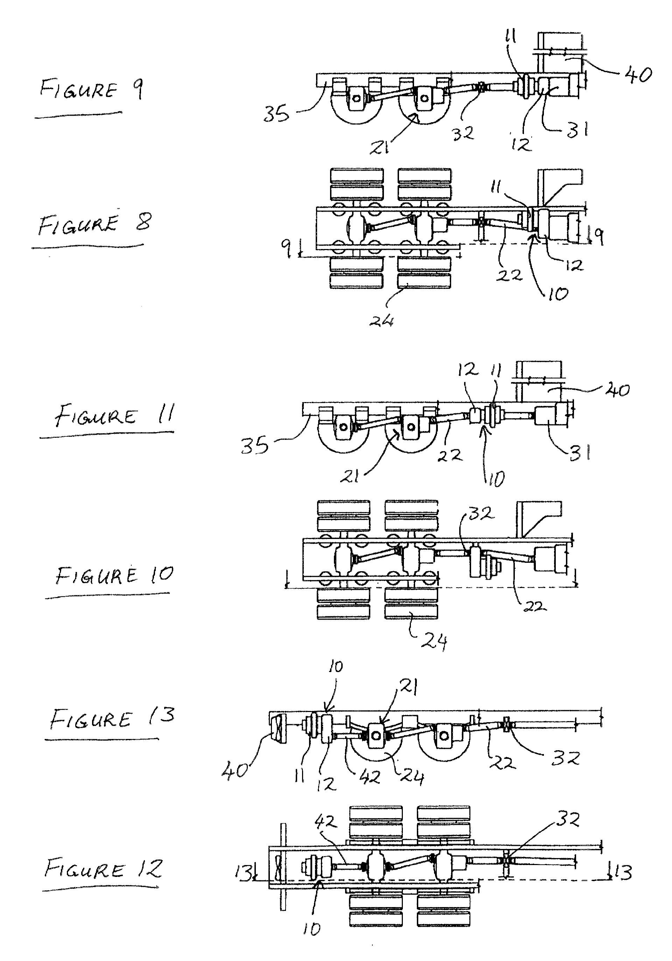

In the present embodiment the transmission transfer case 12 is a chain drive 13 as illustrated in Figure 1. The axis of a large gear or sprocket 14 is in the vehicle's driveline. That is, large sprocket 14 has an input shaft 16 that is mounted to the drive shaft. Rotation of the drive shaft rotates large sprocket 14 at a first speed which imparts, by way of a chain 20, rotational movement to a small sprocket 15 at a second, greater speed. Small sprocket 15 has an output shaft 17 that is mounted to the input shaft of retarder 11. By increasing the input speed to the retarder, more power can be absorbed for the same sized retarder, or a smaller retarder can be used for the same retarding capacity.

The transmission of the present invention is not restricted to a chain drive but may comprise a gear drive, a combination of the two or any other equivalent means that provides a speed ratio between its input speed and output speed such as V or toothed belts and pulleys.

Not only can the retarder syatem 10 be mounted in the transmission driveline of a vehicle, but it can also be mounted in a trailer to retard a vehicle's speed at the trailer wheels. In this case, and as illustrated in figures 2 and 3, one of the conventional trailer axles of trailer 25 is replaced with a driving axle assembly 21 having a drive axle 23 and a driving shaft 22, with the transfer case 12 of the retarder system 10 mounted on the driving shaft 22. The retarder itself is mounted above the transfer case and under the trailer chassis 35. The driving axle assembly 21 can be of any conventional axle assembly, such as a crown wheel and pinion type or a non-bevel type, both with a differential. Drive shaft 22 is coupled by universal joints at one end to the drive axle 23 and at its other end to input shaft 16 on transfer case 12. Large sprocket 14 of transfer case 12 is mounted on input shaft 16, as illustrated in figure 3. The turning wheels 24 on trailer 25 rotate input shaft 16 by way of driving axle assembly 21. Rotation of large sprocket 14 on input shaft 16 causes small sprocket 15 in the transfer case to rotate at a greater speed. Activation of retarder 11 retards rotation of output shaft 17 on which small sprocket 15 is mounted thereby imparting the retarding force to large sprocket 14, driving axle assembly 21 and back to wheels 24. Taking retarder 11 out of the main driveline and providing a gear ratio increases rotational speed at the retarder input, increases the retarder capacity thus increasing the rate of vehicle retarding.

In a trailer towed by a prime mover the wheels on the trailer can be mounted on stub axles. In this case it is understood that a retarder system can be coupled between each stub axle and the trailer.

Also illustrated in figures 2 and 3 is an alternator and coolant pump 26 driven by the retarder through an electric clutch 27. The alternator supplies a high voltage field current to control the retarder. If the retarder is liquid cooled, a radiator and duct assembly 28 is located nearby. The retarder is controlled by an electronic circuit that is activated at the driver's cabin, commonly by an air pressure switch in the cabin. Electronic controls provide a number of different braking stages that can be electronically controlled thereby modulating retardation of the vehicle accordingly.

The size of retarders conventionally mounted in the driveline of vehicles is often very limited and can vary between vehicle types. For example, with heavy prime movers the retarder is mounted at the rear of the transmission in the driveline where mounting space is restricted. Consequently the size of the retarder, and therefore the amount of power absorbed by it, is dictated by the amount of available mounting space at the driveline under a vehicle. Additionally, the cooling system for dissipating heat generated by the retarder is also fitted under the chassis near the retarder creating a greater demand for mounting space. With the present system if a desired retarder type or size cannot be mounted in the main driveline of an articulated vehicle, the retarder, transfer case and cooling system can be mounted on a trailer of the vehicle where more room is available to support the system. Mounting retarders in the trailers also improves trailer stability in poor traction conditions. With high capacity requirements it may be desirable to drive the retarder with more than one axle, most trailers have three axles. However, coupling all the axles in a set could involve wind up in the system causing more wear and complication than can be tolerated. It would therefore be more effective to have smaller separate retarders fitted to each axle with no connection between them.

In non-articulated vehicles where retarder mounting space is limited, the present retarder system allows the retarder to be fitted in positions not previously available. Specifically, the transfer case provides a greater number of mounting options of the retarder. Figures 4 and 5 illustrate the retarder system mounted above an axle differential 30 in a vehicle. This mounting arrangement is suited for vehicles such as buses. Figures 4 and 5 also illustrate a drive assembly comprising the vehicle's transmission 31 and drive shaft 22, having center support bearings 32 and coupled to a final drive 33 which passes power from the vehicle's transmission through half shafts 34 to the wheels 24. The retarder system is located over the final drive, which in this case is a conventional bevel drive axle, with the input shaft 16 of the transfer case 12 attached to the nose of the differential. The retarder is mounted under the chassis rail 35, safely above the ground and out of the main driveline. A radiator and duct assembly 28 is mounted under the chassis for liquid cooling the retarder. A cooling fan for the liquid cooling system is not necessary if the ducts and radiator are designed to suitably cool under the air flow of the moving vehicle. With air cooled retarders the air ducts are designed surrounding the retarder to directly dissipate the heat.

Figures 6 and 7 illustrate the vehicle retarder system mounted across a non-drive axle 41. In this instance, the transfer case, and specifically large sprocket 14, is mounted with a differential gear set on axle 41, which defines the input shaft to the transfer case 12. Retarder 11 couples to the output shaft of small sprocket 15 and is mounted above the transfer case 12.

Figures 8 and 9 illustrate the mounting arrangement for the vehicle retarder system at the rear of the transmission 31. This arrangement is suitable for non-articulated vehicles. In this arrangement the retarder 11 is mounted offset to drive shaft 22 between the transmission 31 and center support bearings 32. Transfer case 12 is coupled to the transmission output, which is coaxially aligned with the drive shaft 22. In operation, the vehicle engine drives transmission 31 which in turn imparts the driving force to the wheels 24 through drive shaft 22 and driving axle assembly 21. Large and small sprockets 14 and 15 rotate continuously with the drive shaft since transfer case 12 is coupled to the transmission output shaft. When signalled, by way of a suitable circuit from the vehicle's controls, retarder 11 is activated to retard rotational movement of the sprockets in the transfer case and thereby rotation of the drive shaft and wheels. Cooling radiator 40 is mounted on the chassis close to the retarder.

Figures 10 and 11 are similar to figures 8 and 9 but show the retarder system mounted at the center support bearings 32 of the drive shaft 22. The retarder system in this mounting arrangement operates in the same manner as the system mounted at the rear of the transmission except that the retarding action is carried out further down on the drive shaft closer to the drive assembly 21.

Figures 12 and 13 illustrate the retarder system mounted behind the rear drive axle of a non-articulated vehicle. The figures illustrate a drive shaft extension 42 from the rear drive axle assembly 43. Once again, retarder 11 is offset from the driveline and oriented along the parallel access to the driveline. Radiator 40 at the rear of the vehicle chassis is located near retarder 11 for cooling.

As a result of the speed ratios, the present vehicle retarder system is capable of absorbing increased energy and therefore retards a vehicle more effectively. In turn the increase in energy creates an increased demand for removing the excess heat generated. A larger and/or more efficient cooling system is therefore necessary. This can be achieved by locating the cooling system in an unrestricted space on the vehicle for maximum air flow. With liquid cooled hydraulic retarders, a heat exchanger is located in a position of maximum air flow, for example, at the same location as the radiator in figures 8 to 13.

Construction details of the retarder are not described herein because it is understood that retarders are well known to those skilled in this art. This invention relates to all known retarders and thus any kind and size of driveline retarder can be used with the present invention. Where eddy current retarders are used in the present retarding system, an alternator exciter and a coolant pump can be mounted on the retarder and connected by an electric clutch (see figures 2 and 3) so that the alternator exciter and the coolant pump only operate when the retarder is in use. This reduces drag loses in a vehicle. The alternator can be wired to supply high control voltage to the eddy current retarder fields thereby eliminating the need for an external battery source and high current capacity cablings.

A further advantage with the present vehicle retarder system is that more than one retarding system may be mounted in each trailer of, for example, a road train, regardless of the construction and under-chassis space of the prime mover. Other mounting arrangements to those described are possible depending on vehicle construction and retarder type.

It will be understood to persons skilled in the art of the invention that many modifications may be made without departing from the spirit and scope of the invention.

## Claims

1. A vehicle retarder system adapted to be mounted in the driveline of a vehicle or on a wheel axle, the system comprising a transmission mounted in the driveline or on the axle and a retarding device connected to the transmission and adapted to be coupled to the vehicle for retarding the speed of a vehicle, whereby the transmission transfers rotational speed at the driveline or axle to the retarder at an increased rotational speed.

2. The vehicle retarder system according to claim 1, wherein the transmission is a chain and sprocket drive, belt drive or a gear drive effecting a speed ratio.

3. The vehicle retarder system according to claim 2, wherein the transmission has an input shaft coupled to the drive line or axle and an output shaft coupled to the retarding device.

4. The vehicle retarder system according to claim 3, wherein a large sprocket is mounted on the input shaft and a small sprocket is mounted on the output shaft, a chain engaging around the sprockets to transmit power between the input and output shafts.

5. The vehicle retarder system according to claim 4, wherein a large gear is mounted on the input shaft to mesh with a small gear on the output shaft.

6. The vehicle retarder system according to any one of the preceding claims including a cooling system coupled to the retarder.

7. The vehicle retarder system according to claim 6, wherein the cooling system is a cooling fan.

8. The vehicle retarder system according to claim 6, wherein the cooling system is a heat exchanger.

9. The vehicle retarder system according to claim 8, wherein the heat exchanger is a radiator.

10. A vehicle having a drive shaft, differential or non-drive axle, the vehicle including a vehicle retarder system according to any one of the preceding claims, coupled between the vehicle and the drive shaft, differential or non-drive axle.

11. The vehicle according to claim 10, wherein the input shaft of the transmission is coupled to the drive shaft, the output shaft of the transmission being coupled to the retarder which is secured to the vehicle.

12. The vehicle according to claim 10, wherein the input shaft of the transmission is coupled to the differential, the output shaft of the transmission being coupled to the retarder which is secured to the vehicle.

13. A trailer adapted to be towed by a prime mover, the trailer comprising:
a plurality of wheel sets mounted on axles extending transversely of the trailer,
at least one axle comprising a differential coupled to a retarder via a transmission that increases the input speed to the retarder, the retarder being secured to the trailer.

14. A vehicle comprising wheel sets mounted on axles extending transversely of the vehicle,
at least one wheel set being driven by a propshaft through a differential and a retarding system comprising:
a transmission coupled to a retarder,
the retarder being secured to the vehicle,
the transmission being driven by the propshaft to increase the rotational speed of the input to the retarder.

15. A trailer adapted to be towed by a prime mover, the trailer comprising:
a plurality of wheels mounted on stub axles secured to the trailer, and
a vehicle retarder system according to any one of the proceeding claims being secured between each stub axle and the vehicle.
